# EUROPEAN PATENT SPECIFICATION

(11) **EP 1 773 466 B1**
(45) Date of publication and mention of the grant of the patent: **27.04.2011**
(21) Application number: 05751938.1
(22) Date of filing: 14.06.2005
(51) Int. Cl.: B01D 46/06, B01D 50/00

(54) **FILTER APPARATUS**
FILTERVORRICHTUNG
APPAREIL FILTRANT

(30) Priority: 06.07.2004 GB 0415124
(43) Date of publication of application: 18.04.2007
(73) Proprietor: Anderson, Robert Irvine, Wiveliscombe Taunton TA4 2TF (GB)
(72) Inventor: Anderson, Robert Irvine, Wiveliscombe Taunton TA4 2TF (GB)
(74) Representative: Macpherson, Craig Stuart
(86) International application number: PCT/GB2005/002353
(87) International publication number: WO 2006/003365

(56) References cited:
- US-A- 3 642 141
- US-A- 4 473 472

## Description

The present invention relates to a filter apparatus and especially but not exclusively to such a filter apparatus for use in removing moisture and airborne contaminants from atmospheric air which is to be delivered, for example by high volume industrial fans through a duct system, be it for ventilation or cooling of electronic equipment, for example, transmitters or other electronic consoles, or for air conditioning.

Air supply systems generally require outside air to be filtered and, in high humidity atmospheres, humidity to be reduced.

Many types of air filters exist which can be used to remove both atmospheric moisture and airborne contaminants such as pollen, seeds, insects, dust and other pollutants. These filters have in the past been constructed from various types of materials. Dry filters, for example, have been constructed from glass fiber and activated charcoal. These filters can be manufactured in a range of densities, depending on the size of the particulates that they have to retain.

There are however several problems associated with these types of filters.

Although they can be efficient in dry climates, high humidity and rain can cause saturation. Very often on site inspections show that the filters have collapsed owing to water saturation, through rain water being drawn in with the fresh air supply, or more often because humidity has been condensing on the filters and has built up very quickly. Once the filter gets damp, it acts as a sink for any moisture in the humidified air. The chill factor of the air velocity also hits the wet filter and this action is accumulative. These air filters once saturated, function as water sinks pulling air through unfiltered.

Saturation therefore has the effect of reducing the efficiency of filters necessitating their replacement at considerable expense. Often, in order to keep costs down, such filters are manufactured to be disposable for example by utilizing aluminium frames, with wire mesh, where the filter pads are replaceable. However, some disposable filters are not very strongly constructed, for example, they may be constructed with cardboard frames which collapse when saturated, necessitating replacement of the whole unit.

In order to reduce humidity, baffle plates are often used in conjunction with such filters. Although these baffle plates reduce some humidity they create pressure loss on air velocity across the unit and so are not desirable.

Lack of maintenance can cause further problems as the filters can become heavily contaminated with airborne pollutants, further impeding airflow through the filter. In almost any mechanical type ventilation, there is a possible source of atmospheric contamination. A large percentage of microorganisms are dust borne and therefore if the filters are not replaced regularly they become contaminated and a health hazard. As fresh air passes through a contaminated filter it will pick up contaminants rather than deposit them.

Other filters for reducing humidity use zeolite materials, including silica gel, which absorbs water effectively but has to be blow-dried for re-use. A further disadvantage of silica gel filters is that the pores get clogged with dust and other particulate matter and have to be replaced at considerable expense, as the contaminants cannot easily be removed.

Other examples of apparatus which can be used to filter air supplies are finned cooling coils and water wash spray-type dehumidifiers where the air is pulled through a water shower which acts as a heat sink and the water is continually re-cycled. These systems are however more complex than traditional dry filters and are therefore more expensive to install and run.

Therefore there is a desire to produce filters, which reduce some of the disadvantages associated with presently available filters.

British Patent No 562, 593 describes a filter for use in an internal combustion engine. The filter has an array of spaced parallel tubes for removing dust and impurities from air, in which tubes are perforated or foraminous and are covered with sleeves of woven cloth which are kept wetted with oil. These tubes are filled with an oil absorbent material such as cotton wool.

US4732585 describes a bubbler apparatus for filtering fluids and removing contaminant particulates. The apparatus comprises either a plurality of perforated or unperforated cylinders, which are arranged in staggered rows, or a solid or hollow tube that has its external surface covered with a filamentary material.

US6048376 describes a filter for use in a separator tank for removing oil from a gas oil mixture. The filter contains a plurality of solid diffusing tubes which are preferably surrounded by an oil coalescing element which may be formed from a knitted mesh.

GB2309919 describes a multi-functional filter assembly having a plurality of elongate porous tubes for the removal of entrained impurities in a fluid stream.

Accordingly, the present invention provides an alternative to known filter apparatus, such as those described above.

The invention provides an air filter apparatus comprising a first row of two or more perforated tubes arranged inside and in contact with at least one knitted sleeve, the tubes being arranged side by side in contact with one another. The apparatus is most preferably arranged so that two perforated tubes are arranged inside and in contact with one knitted sleeve.

In a preferred embodiment the filter apparatus may have a second row of two or more perforated tubes arranged inside and in contact with at least one knitted sleeve, the tubes being arranged side by side in contact with one another. Preferably the second row is parallel to the first row and most preferably is spaced apart from the first row. The second row of perforated tubes may be spaced from 10 to 150 mm apart from the first row of perforated tubes, but ideally is spaced 60mm from the first row of perforated tubes.

The apparatus suitably may also have a third row of two or more perforated tubes arranged inside and in contact with at least one knitted sleeve, the tubes being arranged side by side in contact with one another. The third row may be arranged such that it is parallel to the first and or the second row and is most preferably arranged such that it is contact with the second row. In a preferred embodiment the second and third rows are staggered.

Each row of the apparatus preferably has 3 or more perforated tubes and most preferably has 10 perforated tubes. Each individual perforated tube may be arranged inside and in contact with a separate knitted sleeve or pairs of perforated tubes may be arranged inside and in contact with a single knitted sleeve.

Preferably the tubes are cylindrical in shape but it is envisaged that other shapes may be suitable, for example, square, rectangular, hexagonal or elliptical tubes. The perforated tubes are most preferably shaped, such that in use any moisture, which condenses on the filter apparatus, can run freely down their surface under the influence of gravity. Ideally this function may be achieved by utilizing perforated tubes, which are preferably formed from mesh, wherein the mesh defines a plurality of apertures. Preferably the or each tube is rigid or semi rigid.

In a preferred embodiment of the invention the apertures are from 10mm to 25mm in diameter. However they are more preferably from 15mm to 20 mm in diameter and most preferably are 17mm in diameter.

Ideally the mesh tube is constructed from individual interlocking stringers which may be from 0.5mm to 4mm in diameter but are preferably 2mm in diameter. The stringers can be arranged into a helical mesh tube and preferably have apertures which are diamond shaped. When the apertures are diamond shaped the edge of each diamond is 17mm. Although the apertures are preferably diamond shaped it is envisaged that they may be other shapes, for example, circular, square, rectangular, hexagonal or octagonal.

The perforated tubes and the knitted sleeve(s) may be formed from any non-absorbent materials, for example plastics or metal. In particular polyalkylene materials are preferred. In a most preferred embodiment the perforated tubes may be formed from polyethylene and/or each knitted sleeve may be formed from polypropylene.

The knitted sleeve suitably has a plurality of apertures which may be from 0.5mm to 3mm in diameter but are preferably from 1.0mm to 2.0mm in diameter and most preferably are 1.3 mm in diameter.

Another embodiment of the invention provides a filter assembly having a filter apparatus as described above, wherein the or each row of perforated tubes is mounted in a supporting frame. The supporting frame may be removably mounted in a housing, such that they can be easily removed for checking and maintenance. The or each row is preferably mounted within the housing such that any moisture which condenses on the filter apparatus can run freely away under the influence of gravity. Ideally the or each row is mounted vertically within the housing and most preferably the or each row is mounted perpendicular to a path of air to be filtered.

The assembly may also further comprise a draining tray located beneath the or each row, in use, such that moisture removed from the air by the filter apparatus can be collected. The assembly may also comprise a water drain valve to allow any water collected in the draining tray to be removed.

The assembly preferably also has a condensation blade, which starts off the condensation process on air traveling through the assembly. Most preferably the condensation blade is constructed from a moisture repellant material, for example metal or plastics material. In a preferred embodiment the condensation blade is a louver blade and most preferably the blade has a saw tooth edge, which acts as a heat sink to enable the condensation to drip off equally.

In addition the assembly may further comprise a fly screen, which is preferably either made from or coated with an insect repellant material. Also the assembly may comprise means for fixing the apparatus into place on the side of a building, for example, flanges.

The assembly may also have an air baffle in the form of a preferably removable, z-strip which can be positioned in the bottom of the assembly, for example, between the edge of the drainage tray and the edge of the supporting frame(s) to prevent air being pulled under the filters drainage end underneath the filter apparatus. The assembly also preferably has a splash plate, which may be attached to the drainage tray. The splash plate is advantageous as it prevents water from dripping into the duct system.

An embodiment not according to the invention provides a filter for use in a filter apparatus as described above comprising one or more perforated tubes surrounded by a knitted sleeve. The perforated tubes may be formed from mesh having a plurality of diamond shaped apertures. The knitted sleeve may have apertures of from 1.0 to 2.0 mm. Most preferably the apertures are 1.3mm in diameter.

In order that the invention may be more fully understood, a preferred embodiment of filter apparatus, in accordance therewith, will now be described by way of example only and with reference to the accompanying drawings in which:
Figure 1a shows a section through a preferred embodiment of a filter assembly having a filter apparatus according to the present invention.
Figure 1b shows a partial schematic view, from the intake side, of the filter assembly and apparatus shown in Figure 1a.
Figure 1c shows a partial schematic plan view, of the filter assembly and apparatus shown in Figures 1a and 1b.
Figure 2 shows a side view of a filter apparatus in accordance with the present invention.
Figure 3 shows a view from the intake side of a filter assembly.
Figure 4 shows a schematic plan view of the filter assembly.
Figure 5 shows a graphical representation showing that the performance of the filter apparatus does not substantially deteriorate over time.

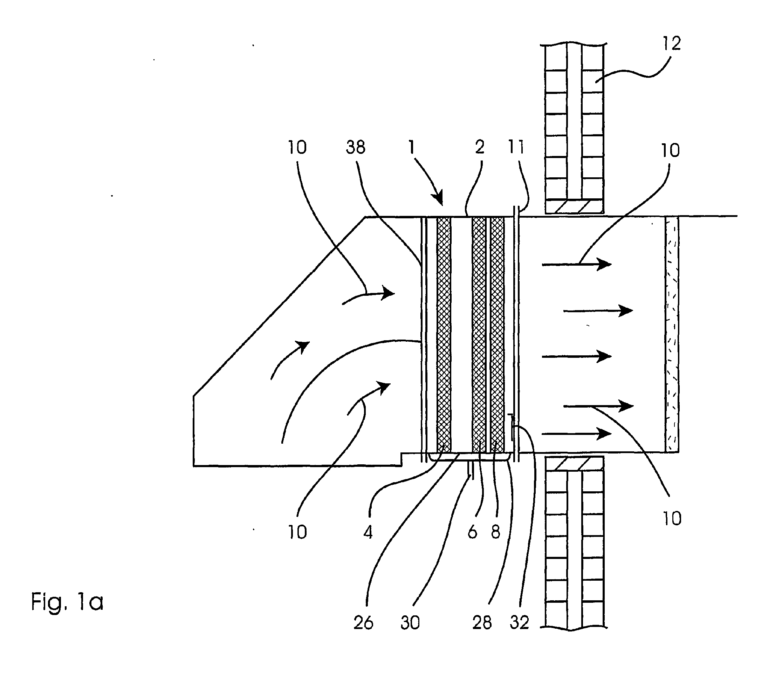

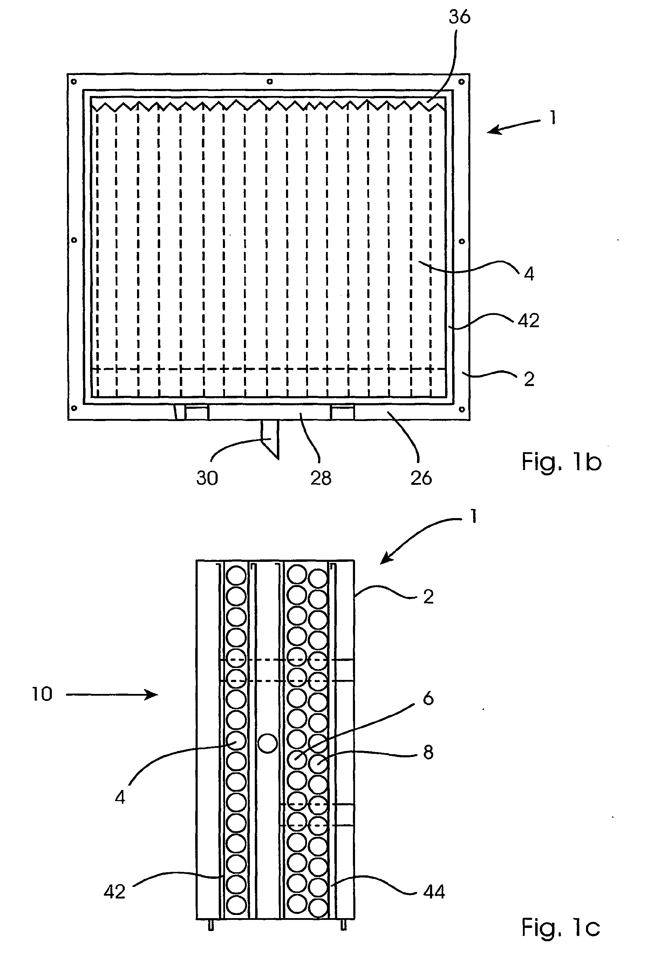

As indicated in Figures 1a, b and c, the filter assembly indicated generally at 1 has a housing 2 in which a first 4, second 6 and third 8 row of mesh tubes is positioned, such that they are in the path of atmospheric air (indicated generally by the arrows 10) being drawn, by fans (not shown), into a building 12 from outside. In this arrangement the atmospheric air 10 is forced to pass through the rows of mesh tubes 4, 6, 8 removing moisture from the air 10 whilst at the same time removing pollutants such as air debris and other contaminants from the air stream 10. This filter apparatus 1 creates little impedance to airflow 10, and this level of performance does not deteriorate substantially over time even with particulate loading and/or moisture saturation.

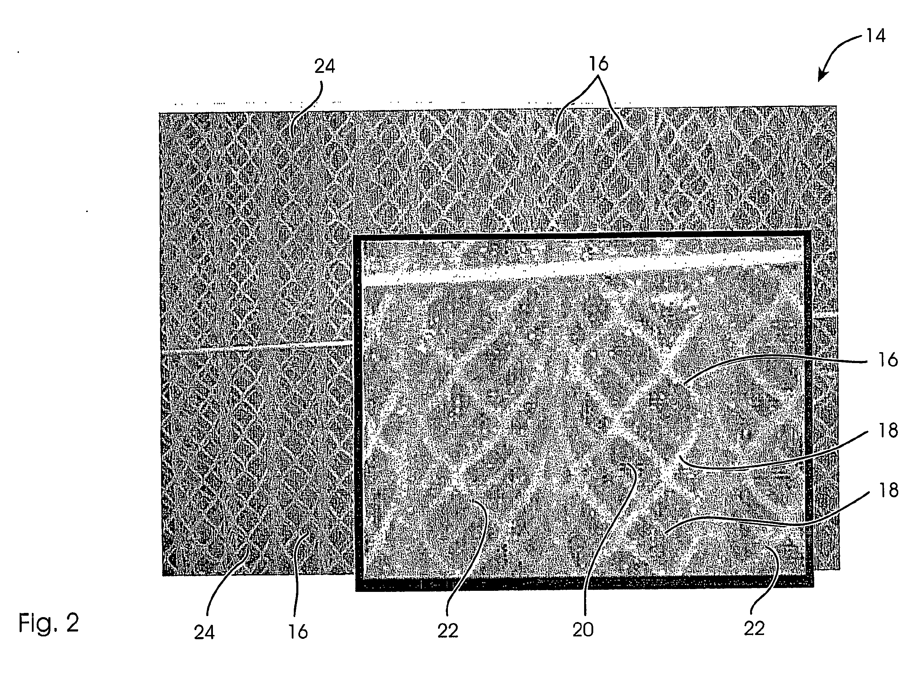

Figure 2 shows the structure of the filter apparatus as shown in Figure 1. An insert is provided showing a magnification of parts of the filter apparatus.

The filter apparatus indicated generally at 14 is formed from two components, the first being a mesh tube 16 formed from any suitable material, in particular plastics material, for example, polyethylene. The tube 16 is constructed from individual stringers 18 of plastics material each of which is from 0.5mm to 4mm in diameter and most preferably is 2mm in diameter. The second component is a knitted sleeve 20, which is fitted around a pair of tubes 16, 16.

It is envisaged that although the tubes 16 can be constructed manually by joining individual stringers 18 together, the tubes 16 could be formed using other methods of manufacture, for example, by molding or extrusion.

The tube 16 is preferably 50mm in diameter. In a preferred embodiment of the invention the tube 16 is constructed from 12 stringers 18, although it is envisaged that the tubes 16 could be made using other numbers of stringers 18, for example any number between 30 and 1. The length and number of tubes 16 i.e. the total filter area, will depend on several factors for example the size of the air flow aperture and also on the volume of air flow.

The stringers 18 are arranged such that they are in contact with one another at multiple locations to form nodes 22 in the mesh tube 16. The stringers 18 are arranged such that they define a number of diamond shaped apertures 24. The stringers 18 are angled downwardly with respect to the vertical axis of the tube 16 to allow moisture to travel down them under the influence of gravity. An angle of between 70 and 10 degrees is preferred, 55 and 30 degrees is more preferred and a 45 degree angle with respect to the longitudinal axis of the tube 16 is most preferred as it assists in an equal flow of controlled speed in any coalescing droplets.

Although the apertures 24, defined by the arrangement of the stringers 18, are preferably diamond shaped, it is envisaged that the stringers 18 may be arranged in any way which allows moisture that condenses on them, in use, to flow freely along them under the influence of gravity. In order to achieve this function, the tube 16 should be arranged such that in use, the stringers 18 are not horizontal.

Preferably the diamond apertures 24 defined by the stringers 18 measure between 10 and 25mm along each side, more preferably between 15 and 20 mm across each side and are most preferably 17mm x 17mm.

The stringers 18 forming the tube 16 provide an open area for free airflow to pass through. As stated above the tubes 4, 6, 8, 16 shown in Figures 1a, 1b, 1c and 2, in use, are arranged such that they are vertical to the ground and perpendicular to the air flow such that air will pass through one side of the tubes 4, 6, 8, 16 and out of the other side.

The tube 16 serves as a skeleton support for the second element of the filter apparatus 14, the knitted sleeve 20. The knitted sleeve 20 shown in figure 2 is manufactured from polypropylene, or any other suitable material, for example plastics material that is preferably rot-proof. The sleeve 20 is positioned surrounding a pair of tubes 16, and is seamless. The sleeve 20 is constructed from a loose knitted stitch, which allows air to flow freely through the side of the filter 16 across its diameter. Most preferably the knitted sleeve 20 is manufactured on a circular knitting machine from 1.3-denier polypropylene strand, with 4.5 centimeters per square cm stitches providing a chain like knit. The mesh only stretches to a limited amount cross wise, but ideally can stretch by approximately 50% length-wise. The length-wise stretch is beneficial for refining the efficacy of the filter.

Preferably two tubes 16, 16 are covered by one knitted sleeve 20 in which case the loosely knitted fabric sleeve 20 is 10cm in diameter in use when stretched over both tubes 16, 16 and is tight enough to keep the two tubes 16,16 in contact with one another. As the sleeve 20 envelops the two tubes 16,16, surface contact with the sleeve 20 is limited to *50*% of each tube. The surface tension of the moisture coalescing droplets is held in suspense by the knitted stitch used in the sleeve 20. This structure allows air to flow freely through the side of the tubes 16, 16 across their diameter.

When this filter apparatus 14 is in use and air is drawn through the knitted sleeve 20 and the tubes 16, any moisture present in the air becomes suspended on the knitted sleeve 20, and as more moisture is added, it starts to coalesce into droplets. The droplets increase in size until the surface tension of the droplet can no longer support the droplet on the knitted sleeve 20, so it flows downwardly to the bottom of the tube 16 along the stringers 18.

The filter apparatus 14 functions in this way because the interstices of the surface of the knitted sleeve 20 cause any moisture passing through it to become suspended, eventually because of the chill factor in the air stream and the air passing through the wet filter apparatus 16, this causes the humidity to drop to dew point, causing further condensation on the knitted sleeve 20 which again drains off down the stringers 18. The shape of the tube 16 prevents these droplets re-entering the air stream, as it accelerates the speed of dispersion.

The coalescing droplets also act as traps for very fine (<10micron) particulates, which block conventional filters to the point where they need replacing on a regular basis. In this filter apparatus 14 these kind of particles are washed away with the condensation and therefore do not block the filter apparatus 14.

The filter apparatus 14 also catches larger contaminants, for example, pollen and fine microparticles. These particles do not penetrate the knitted sleeve 20 but remain on the surface allowing easy removal using a brush or conventional vacuum cleaner. The filter apparatus 14 of this invention therefore have reduced maintenance costs and produce less waste and are therefore beneficial to the environment.

This filter apparatus 14 can be used in conjunction with presently available dry filters such as those described earlier and can therefore act as a first stage filter to remove contaminants by effectively washing them out of the air, before the air reaches the dry filters. This combination of new and known filters would prevent fresh air having to be pulled through highly contaminated filter pads.

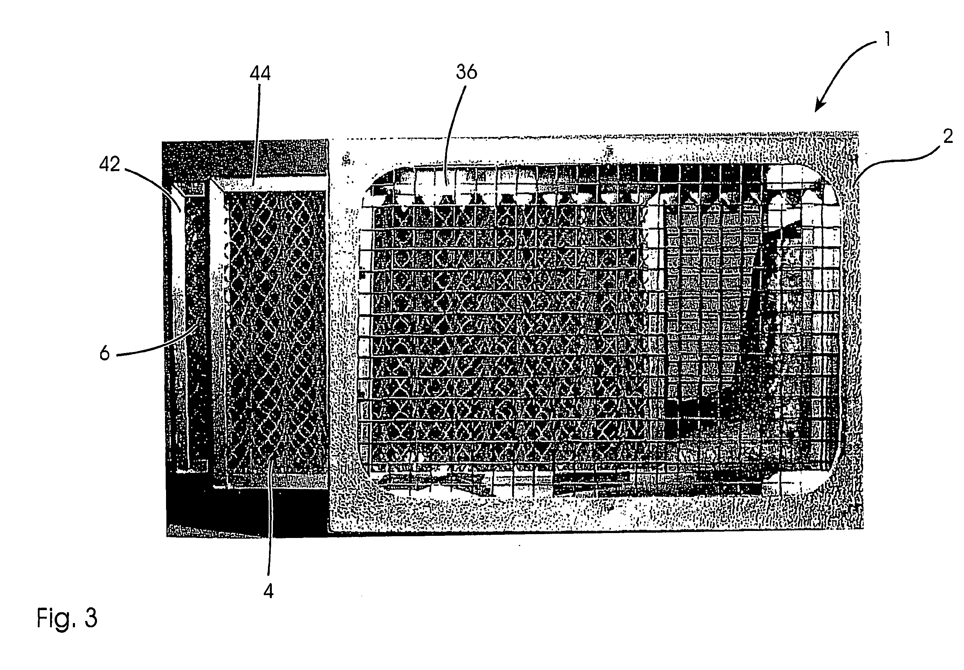

Figures 1a, 1b, 1c and 3 show a preferred embodiment of the filter assembly 1 where three rows of tubes 4, 6, 8 (only 4 can be seen in Figure 1b and only 4 and 6 can be seen in Figure 3) are positioned within support casings 42, 44. The support casings 42, 44 are removably located within the housing 2, such that they can slide in and out through an access door (not shown). The support casings 42, 44 fit into aluminium angle slide rails and rest on stool supports (not shown). The housing 2 is preferably manufactured from marine quality aluminium and may be any suitable shape, for example, square or rectangular in shape. The depth of the housing 2 preferably remains constant however the height and width may vary, depending on requirements. For example the housing may be from 600mm to 1200mm in height and 500mm to 200mm in width. Several filter apparatus could be stacked on top of one another for extra height if required. Both ends of the housing 2 are preferably flanged 11 for attachment to a building 12.

The bottom panel 26 of the housing 2 is constructed as a draining tray 28 with a water trap 30, which preferably has a full width splash plate 32, attached thereto, as well as a water drain valve (not shown) with a rubber flap and an adjustable pressure screw.

The housing 2 also preferably has a fixed louvre blade 36 with lower saw tooth pattern type edge (Shown in Figure 3 and Figure 1b). This helps to start the condensing process as the moisture gets pulled in with the airflow. This blade 36 is most preferably positioned on the intake side of the housing 2. The intake side of the filter 1 also has a fly screen 38, which is made of a moisture and insect repellent material.

The rows of mesh tubes 4, 6, 8 are held in position in the housing 2 preferably 40mm up from the bottom of the drainage tray 28. This arrangement allows the rows of mesh tubes 4, 6, 8 to be easily removed for inspection and cleaning purposes.

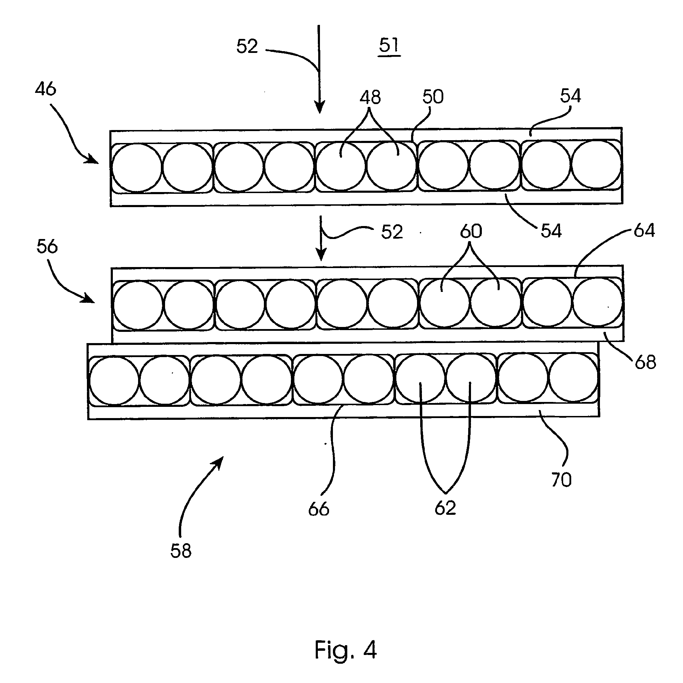

Figure 4 shows a schematic plan view of a preferred arrangement of filter assembly. On the intake side 51 of the housing (not shown) a first row of mesh tubes 46, in the form of a single bank of pairs of mesh tubes 48, each pair covered with a knitted sleeve 50, is arranged across the path of the airflow 52. The first row of mesh tubes 46 is preferably 50cm wide having 5 pairs of mesh tubes 48. The tubes 48 are packed tightly together side by side in a single row 46 in a support casing 54. A gap of between 10 and 150 mm, and preferably 60mm, separates this first row 46 of pairs of mesh tubes 48 from a second 56 and a third 58 row of mesh tubes. The second 56 and third 58 rows of mesh tubes are each constructed in the form of a single bank of pairs of mesh tubes 60, 62 each covered with a knitted sleeve 64, 66, and are positioned towards the output side of the airflow 52. The second 56 and third 58 row of mesh tubes are packed tightly together side by side each in a support casing 68, 70. The second 56 and third 58 rows are arranged across the path of the airflow 52, parallel to the first row 46 and are in close proximity to one another. Most preferably there is no gap between the second 56 and third 58 rows and they are arranged such that one row overlaps the other.

This filter arrangement works by a two-stage filtration process. Air 52 is drawn into the filter rows 46, 56, 58 preferably using an electric fan system (not shown), and passes through the first row of filters 46. This first row 46 arrests all particulates or bodies >1 micron in size and a percentage of moisture.

Once the air 52 has passed through the first row 46 of filters it then passes through the second 56 and third 58 rows of filters, which remove any remaining moisture. An important feature of this part of the process is that there is very little resistance to the air flow 52, resulting in low loads on the fans in the system and therefore lower running costs.

The first row of filters 46 also collects all of the larger pollutants, for example, insects and pollen meaning that these do not impregnate the second 56 and third 58 rows. The pollutants can then simply be cleaned off the surface of the knitted sleeves 50,64,66 using a soft brush or a domestic vacuum cleaner. The rows 46, 56, 58 are therefore reusable and therefore the filter apparatus does not need to be replaced as frequently as standard dry filters.

An advantage of the filter assembly of this invention shown in Figures 1, 3 and 4 is that the air 10, 52 can accelerate through the system, causing the air 10, 52 to chill and condense, forming water droplets, which suspend on the unique filter material used in the invention. These droplets once formed act as further heat sinks for following air 10, 52 in the stream, the droplets increase in size until the surface tension of the droplet can no longer support the droplet on the knitted mesh 20, 50, 64, 66, so it begins to fall. In the preferred embodiment shown in Figures 1, these droplets are collected in a tray 32 at the bottom of the system. The droplets are prevented from re-entering the air stream 10 due to the form of the tubes 4, 6, 8 which acts to accelerates the speed of dispersion.

Due to the unique nature of the design, and unlike conventional high-volume filter systems, these filtration and drying processes occur with a very little pressure drop across the system, even when the system is contaminated with high levels of filtered particulates.

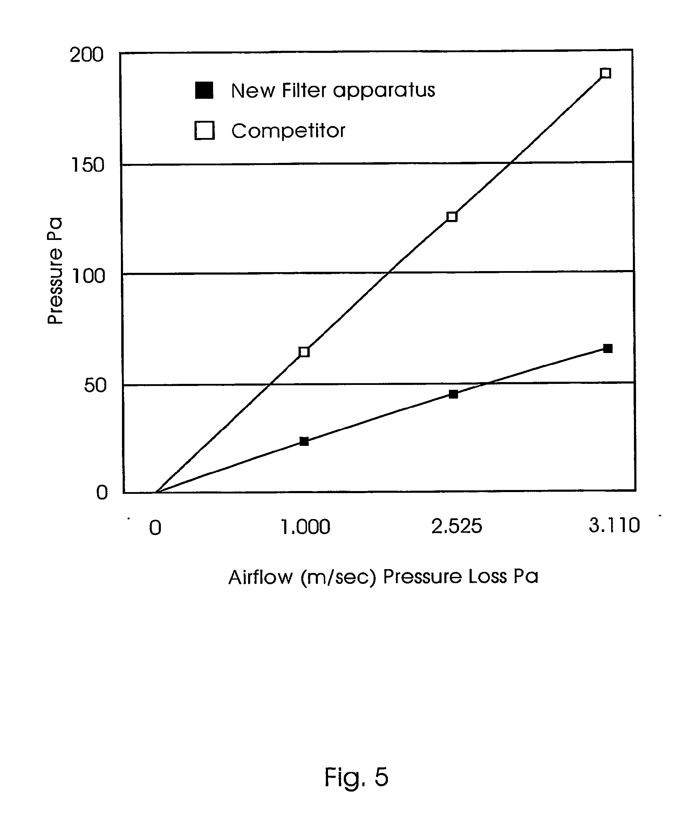

Figure 5 demonstrates the effectiveness of the filter showing that its performance does not deteriorate substantially over time.

## Claims

1. An air filter apparatus (14) comprising a first row (4) of two or more perforated tubes (16) arranged inside and in contact with at least one knitted sleeve (20), the tubes (16) being arranged side by side in contact with one another.

2. An apparatus (14) according to claim 1, further comprising a second row (6) of two or more perforated tubes (16) arranged inside and in contact with at least one knitted sleeve (20), the tubes (16) being arranged side by side in contact with one another.

3. An apparatus (14) according to claims 2, further comprising a third row (8) of two or more perforated tubes (16) arranged inside and in contact with at least one knitted sleeve (20), the tubes (16) being arranged side by side in contact with one another.

4. An apparatus (14) according to any preceding claim, wherein each individual perforated tube (16) is arranged inside and in contact with a separate knitted sleeve (20).

5. An apparatus (14) according to any of claims 1 to 3, wherein pairs of perforated tubes (16) are arranged inside and in contact with a single knitted sleeve (20).

6. An apparatus (14) according to any preceding claim, wherein the perforated tubes (16) are shaped, such that in use any moisture which condenses on the filter apparatus (14) can run freely down their surface under the influence of gravity.

7. An apparatus (14) according to any proceeding claim, wherein the perforated tubes (16) are formed from mesh wherein the mesh defines a plurality of apertures (24).

8. An apparatus (14) according to claim 7 wherein the apertures (24) are diamond shaped.

9. An apparatus (14) according to any preceding claim, wherein the perforated tubes (16) and the or each knitted sleeve (20) are formed from non-absorbent materials, for example plastics or metal.

10. An apparatus (14) according to any preceding claim, wherein the knitted sleeve (20) has a plurality of apertures of from 0.5mm to 3mm in diameter.

11. A filter assembly (1) comprising a filter apparatus (14) according to any of the preceding claims, wherein the or each row (4, 6, 8) of perforated tubes (16) is mounted in a supporting frame (42, 44).

12. An assembly (1) according to claim 11, wherein the or each supporting frame (42, 44) is removably mounted in a housing (2).

13. An assembly (1) according to claim 11 or 12, wherein the or each row (4, 6, 8) is mounted perpendicular to a path of air to be filtered.

## Patentansprüche

1. Luftfiltervorrichtung (14), umfassend eine erste Reihe (4) von zwei oder mehr gelochten Röhren (16), die in mindestens einer gestrickten Hülle (20) und diese berührend angeordnet sind, wobei die Röhren (16) nebeneinander einander berührend angeordnet sind.

2. Vorrichtung (14) nach Anspruch 1, weiter umfassend eine zweite Reihe (6) von zwei oder mehr gelochten Röhren (16), die in mindestens einer gestrickten Hülle (20) und diese berührend angeordnet sind, wobei die Röhren (16) nebeneinander einander berührend angeordnet sind.

3. Vorrichtung (14) nach Anspruch 2, weiter umfassend eine dritte Reihe (8) von zwei oder mehr gelochten Röhren (16), die in mindestens einer gestrickten Hülle (20) und diese berührend angeordnet sind, wobei die Röhren (16) nebeneinander einander berührend angeordnet sind.

4. Vorrichtung (14) nach einem der vorangehenden Ansprüche, wobei die einzelnen gelochten Röhren (16) jeweils in einer getrennten gestrickten Hülle (20) und diese berührend angeordnet sind.

5. Vorrichtung (14) nach einem der Ansprüche 1 bis 3, wobei Paare von gelochten Röhren (16) in einer einzigen gestrickten Hülle (20) und diese berührend angeordnet sind.

6. Vorrichtung (14) nach einem der vorangehenden Ansprüche, wobei die gelochten Röhren (16) so geformt sind, dass in Gebrauch Feuchtigkeit, die an der Filtervorrichtung (14) kondensiert, ungehindert unter dem Einfluss von Schwerkraft an ihrer Oberfläche herunterlaufen kann.

7. Vorrichtung (14) nach einem der vorangehenden Ansprüche, wobei die gelochten Röhren (16) aus Gitter gebildet sind, wobei das Gitter mehrere Öffnungen (24) definiert.

8. Vorrichtung (14) nach Anspruch 7, wobei die Öffnungen (24) rautenförmig sind.

9. Vorrichtung (14) nach einem der vorangehenden Ansprüche, wobei die gelochten Röhren (16) und die, beziehungsweise jede gestrickte Hülle (20) aus nichtabsorbierenden Materialien gebildet sind, zum Beispiel Kunststoffen oder Metall.

10. Vorrichtung (14) nach einem der vorangehenden Ansprüche, wobei die gestrickte Hülle (20) mehrere Öffnungen mit von 0,5 mm bis 3 mm Durchmesser hat.

11. Filterbaugruppe (1), umfassend eine Filtervorrichtung (14) nach einem der vorangehenden Ansprüche, wobei die, beziehungsweise jede Reihe (4, 6, 8) von gelochten Röhren (16) in einem Halterahmen (42, 44) montiert ist.

12. Baugruppe (1) nach Anspruch 11, wobei der, beziehungsweise jeder Halterahmen (42, 44) herausnehmbar in einem Gehäuse (2) montiert ist.

13. Baugruppe (1) nach Anspruch 11 oder 12, wobei die, beziehungsweise jede Reihe (4, 6, 8) senkrecht zu einem Pfad von zu filternder Luft montiert ist.

## Revendications

1. Dispositif de filtre à air (14) comportant une première rangée (4) de deux tubes perforés ou plus (16) placée à l'intérieur d'au moins un manchon tricoté (20) et en contact avec ledit au moins un manchon tricoté (20), les tubes (16) étant placés côte à côte en contact les uns avec les autres.

2. Dispositif (14) selon la revendication 1, comportant en outre une deuxième rangée (6) de deux tubes perforés ou plus (16) placée à l'intérieur d'au moins un manchon tricoté (20) et en contact avec ledit au moins un manchon tricoté (20), les tubes (16) étant placés côte à côte en contact les uns avec les autres.

3. Dispositif (14) selon la revendication 2, comportant en outre une troisième rangée (8) de deux tubes perforés ou plus (16) placée à l'intérieur d'au moins un manchon tricoté (20) et en contact avec ledit au moins un manchon tricoté (20), les tubes (16) étant placés côte à côte en contact les uns avec les autres.

4. Dispositif (14) selon l'une quelconque des revendications précédentes, dans lequel chaque tube individuel perforé (16) est placé à l'intérieur d'un manchon tricoté séparé et en contact avec ledit manchon tricoté séparé (20).

5. Dispositif (14) selon l'une quelconque des revendications 1 à 3, dans lequel des paires de tubes perforés (16) sont placées à l'intérieur d'un seul manchon tricoté et en contact avec ledit seul manchon tricoté (20).

6. Dispositif (14) selon l'une quelconque des revendications précédentes, dans lequel la forme des tubes perforés (16) est telle que, en fonctionnement, l'humidité condensée sur le dispositif de filtre (14) peut couler librement vers le bas sur la surface des tubes sous l'effet de la gravité.

7. Dispositif (14) selon l'une quelconque des revendications précédentes, dans lequel les tubes perforés (16) sont faits de mailles dans lesquels les mailles définissent plusieurs ouvertures (24).

8. Dispositif (14) selon la revendication 7 dans lequel les ouvertures (24) sont en forme de losange.

9. Dispositif (14) selon l'une quelconque des revendications précédentes, dans lequel les tubes perforés (16) et le ou chaque manchon tricoté (20) sont réalisés dans des matériaux non-absorbants, par exemple du plastique ou du métal.

10. Dispositif (14) selon l'une quelconque des revendications précédentes dans lequel le manchon tricoté (20) a plusieurs ouvertures d'un diamètre allant de 0,5 à 3 mm.

11. Ensemble de filtre (1) comportant un dispositif de filtre (14) selon l'une quelconque des revendications précédentes, dans lequel la ou chaque rangée (4, 6, 8) de tubes perforés (16) est montée sur un bâti-support (42, 44).

12. Ensemble (1) selon la revendication 11, dans lequel le ou chaque bâti-support (42, 44) est monté de manière amovible dans un boîtier (2).

13. Ensemble (1) selon la revendication 11 ou 12, dans lequel la ou chaque rangée (4, 6, 8) est montée perpendiculairement à une voie d'air à filtrer.
